# EUROPEAN PATENT APPLICATION

(11) **EP 4 746 092 A1**
(43) Date of publication of application: **20.05.2026**
(21) Application number: 25214539.6
(22) Date of filing: 10.11.2025
(51) Int. Cl.: H01M 10/04, H01M 10/0583, H01M 10/0587, H01M 50/103, H01M 50/466, H01M 50/586, H01M 50/593, H01M 50/474

(54) **ENERGY STORAGE DEVICE**

(30) Priority: 14.11.2024 JP 2024198887
(71) Applicant: Prime Planet Energy & Solutions, Inc., Tokyo 103-0022 (JP)
(72) Inventor: ISHIDA, Riku, Tokyo,, 103-0022 (JP)
(74) Representative: Kuhnen & Wacker Patent- und Rechtsanwaltsbüro PartG mbB

(57) **Abstract**

Provided is a technique for suppressing an inside short circuit of an energy storage device from being caused. An energy storage device disclosed herein includes an electrode assembly including a positive electrode, a negative electrode, and a separator, includes a case configured to accommodate the electrode assembly, and includes a spacer arranged between the case and the electrode assembly. The separator configures an outer surface of the electrode assembly. The separator configuring the outer surface of the electrode assembly is configured to cover a part of the spacer and is joined to the spacer.

## Description

### BACKGROUND OF THE DISCLOSURE

### 1. Technical Field

A present disclosure relates to an energy storage device.

### 2. Background

As an example of an energy storage device, it is possible to use a secondary battery, such as lithium ion secondary battery. Recently, this type of energy storage device is, for example, suitably used in a power supply for driving automobiles, such as battery electric vehicle (BEV), hybrid electric vehicle (HEV), and plug-in hybrid electric vehicle (PHEV), or the like.

A zigzag-shaped laminate body structure of a secondary battery disclosed by Japanese Patent Application Publication No. 2016-103425 includes a positive electrode including a positive electrode terminal, includes a negative electrode including a negative electrode terminal, and includes a separator being formed in a strip-like shape. The separator consists of a general part and an extending part that is configured to extend from the general part. The general part configures a zigzag-shaped structure body that includes a folding part being alternately folded so as to be formed in a zigzag shape and that is configured to interpose the positive electrode and the negative electrode alternately. The extending part configures a laminate body in which the zigzag-shaped structure body is wound. A side surface of the laminate body in a direction orthogonal to a laminate direction of the laminate body includes a separator side surface on which the extending part is exposed. On the laminate body, at least a part of the extending part is fused.

The same publication describes that the configuration described above brings an advantage for effectively enhancing a safety property of the secondary battery.

### SUMMARY

The present inventor thinks to suppress an inside short circuit from being caused on the energy storage device.

According to the herein disclosed technique, an energy storage device is provided. This energy storage device includes an electrode assembly including a positive electrode, a negative electrode, and a separator, includes a case configured to accommodate the electrode assembly, and includes a spacer arranged between the case and the electrode assembly. The separator configures an outer surface of the electrode assembly. The separator configuring the outer surface of the electrode assembly is configured to cover a part of the spacer and is further joined to the spacer.

In accordance with such a configuration, it is possible to suppress the inside short circuit from being caused on the energy storage device.

### BRIEF DESCRIPTION OF THE DRAWINGS

FIG. 1 is a perspective view of an energy storage device 1.
FIG. 2 is a perspective view of the energy storage device 1.
FIG. 3 is an III-III cross section view of FIG. 1.
FIG. 4 is a schematic cross section view of an electrode assembly 30.
FIG. 5 is a perspective view of a spacer 40.
FIG. 6 is a VI-VI cross section view of FIG. 3.
FIG. 7 is a plane view of the electrode assembly 30, a separator 36, and a spacer 40.
FIG. 8 is a plane view of the electrode assembly 30, the separator 36, and the spacer 40.

### DESCRIPTION OF THE EMBODIMENTS

Below, one embodiment of a herein disclosed energy storage device will be explained. The embodiment explained herein is not intended to particularly restrict the herein disclosed technique. The herein disclosed technique is not restricted to the herein explained embodiment, unless specifically mentioned. Drawings are schematically illustrated, and thus are not to always reflect actual things. The members/parts providing the same effect are suitably provided with the same numerals and signs, and overlapping explanations might be omitted. In drawings, reference signs "X", "Y", and "Z" respectively represent "first direction", "second direction", and "third direction" of the present description. In drawings, reference signs "X1", "X2", "Y1", "Y2", "Z1", and "Z2" represent directions of the drawings. However, these directions are defined for convenience sake of explanation, and are not intended to restrict a disposed aspect of the energy storage device at all. A wording "A to B" representing a numerical range not only means "equal to or more than A and not more than B" unless specifically mentioned, but also semantically covers a meaning of "more than A and less than B".

In the present description, a term "energy storage device" represents a device in which an electrical charge and an electrical discharge are generated in response to movement of an electric charge carrier between a pair of electrodes (a positive electrode and a negative electrode) through an electrolyte. The energy storage device semantically covers a secondary battery, such as lithium ion secondary battery, nickel hydrogen battery, and nickel cadmium battery; and a capacitor, such as lithium ion capacitor and electric double layer capacitor. The energy storage device might be, for example, a lithium ion secondary battery.

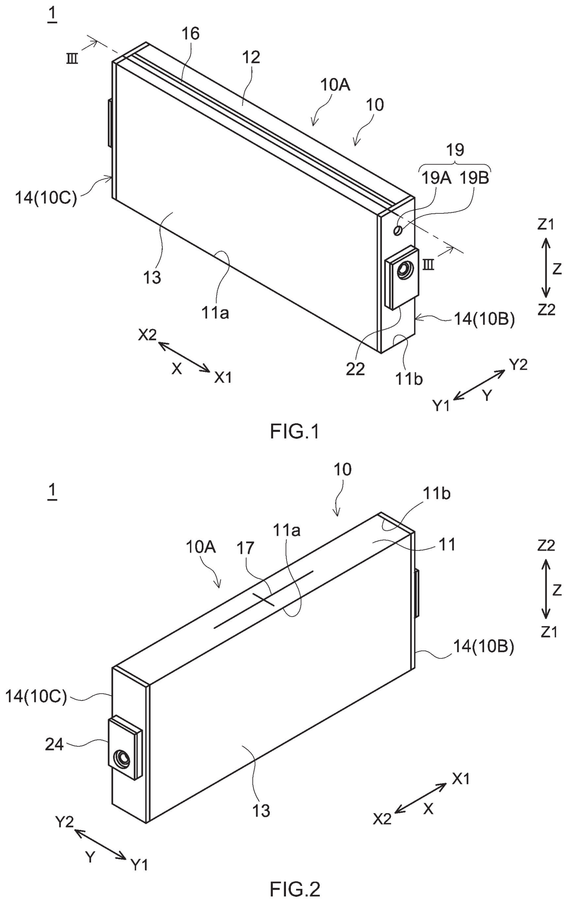

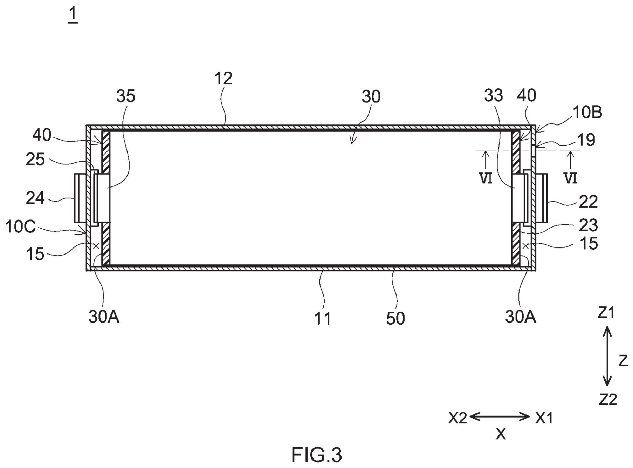

FIG. 1 and FIG. 2 are perspective views of an energy storage device 1. FIG. 1 shows the energy storage device 1 in a situation where a Z1 side is defined as an upper side in drawings. In FIG. 1, an upper surface 12 of the energy storage device 1 is arranged at the upper side in the drawing. FIG. 2 shows the energy storage device 1 in a situation where a Z2 side is defined as an upper side in the drawing. In FIG. 2, a bottom surface 11 of the energy storage device 1 is arranged at the upper side in the drawing. FIG. 3 is an III-III cross section view of FIG. 1. FIG. 3 shows a cross section structure of the energy storage device 1 in a situation where one of first side surfaces 13 (here, the first side surface 13 at an Y1 side) is arranged on a front.

As shown in FIG. 1 to FIG. 3, the energy storage device 1 includes a case 10, a positive electrode terminal 22, a negative electrode terminal 24, an electrode assembly 30, a spacer 40, a resin film 50, and an electrolytic solution (not shown in drawings). The energy storage device 1 herein is a lithium ion secondary battery.

As shown in FIG. 1 to FIG. 3, the case 10 includes a bottom surface 11, an upper surface 12, a pair of first side surfaces 13 opposed to each other, and a pair of second side surfaces 14 opposed to each other. The case 10 herein is formed in a hexahedronal shape. In this embodiment, the bottom surface 11 and the upper surface 12 are formed to be rectangular and are opposed to each other. In embodiments shown in FIG. 1 and FIG. 2, the pair of opposed first side surfaces 13 are configured to extend from a pair of opposed long sides 11a of the bottom surface 11, and to have relatively larger area sizes. The pair of opposed second side surfaces 14 are configured to extend from a pair of opposed short sides 11b of the bottom surface 11 and to have relatively smaller area sizes.

As shown in FIG. 1 to FIG. 3, the case 10 includes a case body 10A, a first sealing plate 10B, and a second sealing plate 10C. The case body 10A is, for example, formed in a square tube shape, and includes the bottom surface 11, the upper surface 12, and the pair of opposed first side surfaces 13. In this embodiment, regarding the case body 10A, a portion surrounded by the bottom surface 11, the upper surface 12, and the pair of opposed first side surfaces 13 is formed to be an opening. As shown in FIG. 3, the energy storage device 1 includes two openings 15.

The case body 10A can be manufactured, for example, by folding and bending one metal plate so as to mold it in a cylindrical shape, and then by joining (for example, welding and joining) a seam. Thus, as shown in FIG. 1, the case body 10A includes a joint part 16 that is configured to extend along the first direction X on the upper surface 12. It is good for the case body 10A, which is not particularly restricting, for example, to be a metal, such as aluminum, aluminum alloy, iron, and iron alloy.

As shown in FIG. 2, the case body 10A includes a safe valve 17 on the bottom surface 11. The safe valve 17 is, for example, a thin-walled part that is set to be broken when an internal pressure of the case 10 reaches a predetermined value so as to release the internal pressure. Incidentally, the safe valve 17 might not always be provided on the bottom surface 11. In another embodiment, the safe valve 17 might be provided on the upper surface 12 or the first side surface 13.

The first sealing plate 10B is, for example, a member configured to seal one of the openings 15. The first sealing plate 10B is, for example, a plate-shaped member formed in an approximately rectangular shape. In this embodiment, the first sealing plate 10B is fit into one of the openings 15 and then joined by welding (for example, laser welding). As shown in FIG. 1 and FIG. 3, the positive electrode terminal 22 is attached to the first sealing plate 10B.

In this embodiment, the first sealing plate 10B includes a liquid injection part 19. The liquid injection part 19 includes a liquid injection hole 19A and a sealing plug 19B. The liquid injection hole 19A herein is a portion through which the electrolytic solution is injected into the case 10 at a manufacturing process of the energy storage device 1. In this embodiment, the liquid injection hole 19A is provided at a position closer to the upper surface 12 on the first sealing plate 10B. The sealing plug 19B herein is a member configured to cover the liquid injection hole 19A.

The second sealing plate 10C is, for example, a member configured to seal the other one of the openings 15. The second sealing plate 10C is, for example, a plate-shaped member formed in an approximately rectangular shape. In this embodiment, the second sealing plate 10C is fit into the other one of the openings 15 and then joined by welding (for example, laser welding). As shown in FIG. 2 and FIG. 3, the negative electrode terminal 24 is attached to the second sealing plate 10C.

In the embodiments shown by FIG. 1 to FIG. 3, the first sealing plate 10B and the second sealing plate 10C configure the pair of opposed second side surfaces 14. It is preferable that both of the first sealing plate 10B and the second sealing plate 10C are, for example, configured with a metal material being the same as the metal material configuring the case body 10A.

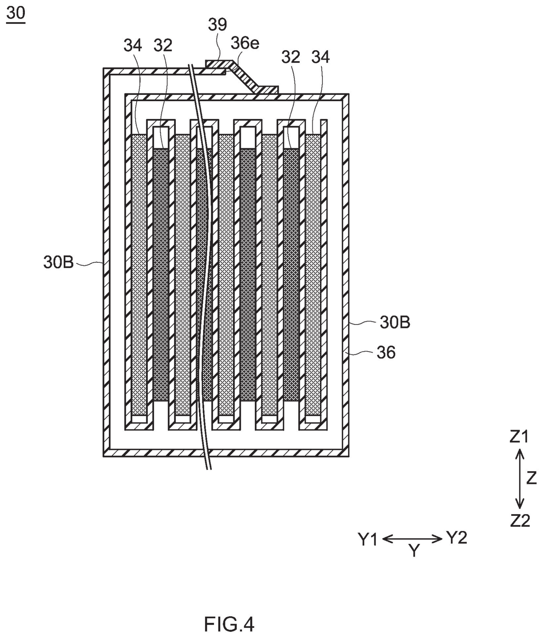

The positive electrode terminal 22 is, for example, electrically connected to the positive electrode 32 of the electrode assembly 30 (see FIG. 4). As shown in FIG. 1 and FIG. 3, the positive electrode terminal 22 is attached to the first sealing plate 10B. As shown in FIG. 3, the positive electrode terminal 22 is electrically connected through the positive electrode current collector part 23 to a positive electrode tab 33 of the electrode assembly 30. The positive electrode terminal 22 is, for example, made of metal, and is preferably made of aluminum or aluminum alloy. Incidentally, the positive electrode terminal 22 might configure the positive electrode current collector part 23.

The negative electrode terminal 24 is, for example, electrically connected to the negative electrode 34 of the electrode assembly 30 (see FIG. 4). As shown in FIG. 2 and FIG. 3, the negative electrode terminal 24 is attached to the second sealing plate 10C. As shown in FIG. 3, the negative electrode terminal 24 is electrically connected through the negative electrode current collector part 25 to a negative electrode tab 35 of the electrode assembly 30. The negative electrode terminal 24 is, for example, made of metal, or is preferably made of copper or copper alloy. Incidentally, the negative electrode terminal 24 might configure the negative electrode current collector part 25.

The electrode assembly 30 is, for example, a power generating element on the energy storage device 1. As shown in FIG. 3, the electrode assembly 30 is accommodated at an inside of the case 10. FIG. 4 is a schematic cross section view of the electrode assembly 30. FIG. 4 schematically shows a cross section structure of the electrode assembly 30 which is viewed from the first sealing plate 10B (see FIG. 3) side. The electrode assembly 30 is, for example, formed in a flat shape. As shown in FIG. 3 and FIG. 4, the electrode assembly 30 includes a pair of first end surfaces 30A opposed to each other and a pair of second end surfaces 30B opposed to each other. In this embodiment, the first end surface 30A is a laminate surface of the electrode and the separator 36, and is an open surface configured to be open toward an outer side of the electrode assembly 30. As shown in FIG. 3, the first end surface 30A is opposed to the first sealing plate 10B or the second sealing plate 10C. In this embodiment, the second end surface 30B is configured with the separator 36. Thus, the separator 36 configuring the second end surface 30B configures an outer surface of the electrode assembly 30. The second end surface 30B herein is formed in a rectangular shape, and is opposed to the first side surface 13 of the case 10.

In the embodiment shown by FIG. 4, one of the first end surfaces 30A is provided with the positive electrode tab 33 that is connected to the positive electrode 32 of the electrode assembly 30. The other one of the first end surfaces 30A is provided with the negative electrode tab 35 that is connected to the negative electrode 34 of the electrode assembly 30. The positive electrode tab 33 herein is provided on each of the positive electrodes 32 contained in the electrode assembly 30. The positive electrode tab 33 (positive electrode tabs 33) provided on each of the positive electrodes 32 is, for example, superimposed so as to configure a positive electrode tab group. The negative electrode tab 35 herein is provided on each of the negative electrodes 34 contained in the electrode assembly 30. The negative electrode tab 35 (negative electrode tabs 35) provided on each of the negative electrodes 34 is, for example, superimposed so as to configure a negative electrode tab group.

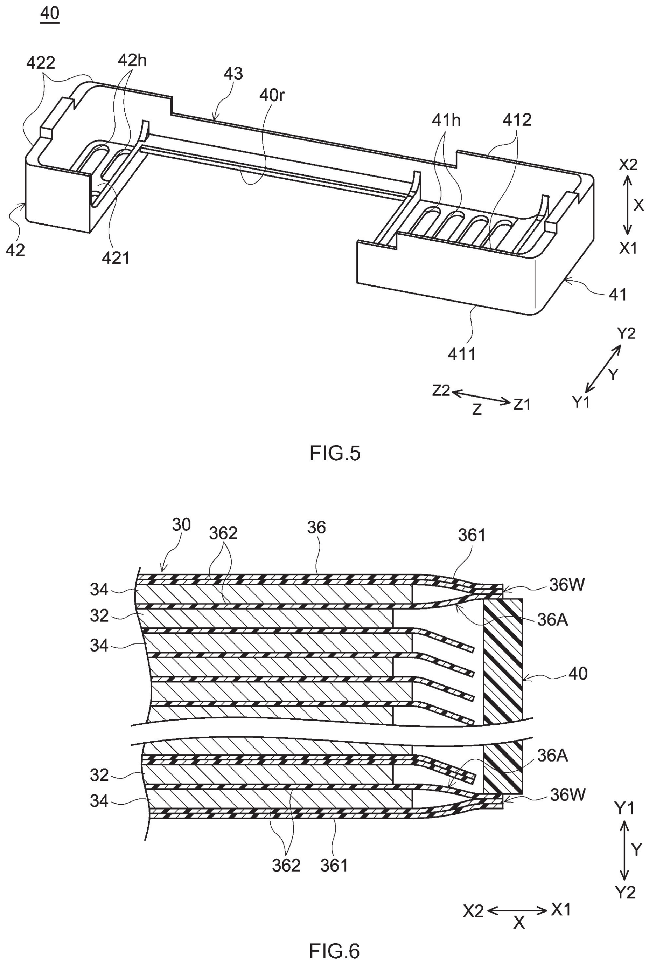

As shown in FIG. 4, the electrode assembly 30 includes the positive electrode 32, the negative electrode 34, and the separator 36 disposed between the positive electrode 32 and the negative electrode 34. In this embodiment, the electrode assembly 30 is formed to have the zigzag shape in which the long separator 36 formed in the strip-like shape is folded alternately at each predetermined interval, and is a flat-shaped electrode assembly having the zigzag-shaped structure in which the positive electrodes 32 and the negative electrodes 34 are alternately interposed by the zigzag-shaped separator 36. In the embodiment shown by FIG. 4, the separator 36 is wound on an outermost periphery of the zigzag-shaped structure, and configures an outer periphery surface (an outer surface) of the electrode assembly 30. In this embodiment, the separator 36 is wound on the electrode arranged at the outermost side in the electrode assembly 30 (in this embodiment, the negative electrode 34 (see FIG. 4 and FIG. 6)), more than once. On a terminal end part 36e of the separator 36, a tape 39 is pasted in order to inhibit winding looseness of the electrode assembly 30.

It is good that the positive electrode 32 is, for example, a positive electrode sheet that is formed in a rectangular sheet shape. In this embodiment, the positive electrode 32 includes a positive electrode current collector foil that is formed in a rectangular sheet shape, and includes a positive electrode active material layer that is provided on a surface of the positive electrode current collector foil. It is preferable that the positive electrode current collector foil is, for example, made of aluminum or aluminum alloy. In the embodiment shown by FIG. 3, the positive electrode tab 33 is provided on an end part of the positive electrode current collector foil (an end part at X1 side in the drawing). The positive electrode tab 33 includes, for example, an exposed area on which the positive electrode current collector foil is exposed. The exposed part of the positive electrode tab 33 is, for example, joined to the positive electrode current collector part 23. The positive electrode active material layer includes, for example, a positive electrode active material. The positive electrode active material is, for example, a material that can reversibly store and release an electric charge carrier. As the positive electrode active material, for example, it is possible without particular restriction to use a material that is used as the positive electrode active material for this kind of energy storage device. The positive electrode active material layer might contain a component other than the positive electrode active material (for example, a binder, an electrically conducting material, or the like).

It is good that the negative electrode 34 is, for example, a negative electrode sheet formed in a rectangular sheet shape. In this embodiment, the negative electrode 34 includes a negative electrode current collector foil that is formed in a rectangular sheet shape, and includes a negative electrode active material layer that is provided on a surface of the negative electrode current collector foil. The negative electrode current collector foil is preferably, for example, made of copper or copper alloy. In the embodiment shown by FIG. 3, the negative electrode tab 35 is provided on an end part of the negative electrode current collector foil (an end part at an X2 side in the drawing). The negative electrode tab 35 includes, for example, an exposed area on which the negative electrode current collector foil is exposed. The exposed part of the negative electrode tab 35 is, for example, joined to the negative electrode current collector part 25. The negative electrode active material layer contains, for example, a negative electrode active material. The negative electrode active material is, for example, a material that can reversibly store and release the electric charge carrier. As the negative electrode active material, for example, it is possible without particular restriction to use a material that is used as the negative electrode active material for this kind of energy storage device. The negative electrode active material layer might contain a component other than the negative electrode active material (for example, the binder, a thickening agent, a dispersing agent, or the like).

As the separator 36, for example, it is possible without particular restriction to use the separator for this kind of energy storage device. The separator 36 might have a single layer structure, or have a two or more layers structure, for example, three layers structure, respectively having different properties and characteristics (thicknesses, porosities, or the like). The separator 36 is, for example, made of resin, or is preferably made of polyolefin resin. It is good that the polyolefin resin is polyethylene, polypropylene, or mixture of them.

As the electrolytic solution, for example, it is possible without particular restriction to use an electrolytic solution for this kind of energy storage device. The electrolytic solution is, for example, a nonaqueous electrolytic solution that contains a nonaqueous solvent (an organic solvent) and a supporting salt. As the nonaqueous solvent, for example, it is possible to use carbonates, such as ethylene carbonate, dimethyl carbonate, and ethyl methyl carbonate. As the supporting salt, for example, it is possible to use a fluorine-containing lithium salt, such as lithium hexafluorophosphate (LiPF₆).

The spacer 40 is, for example, a member arranged between the case 10 and the electrode assembly 30. In the embodiment shown by FIG. 3, the spacer 40 is arranged between the case 10 and the first end surface 30A of the electrode assembly 30. As shown in FIG. 3, the spacer 40 is arranged between the first sealing plate 10B and the electrode assembly 30 (the first end surface 30A at the X1 side) and further arranged between the second sealing plate 10C and the electrode assembly 30 (the first end surface 30A at the X2 side). Incidentally, it is good that the spacer 40 is, for example, configured with an insulating property resin (for example, a polyamide resin, or the like) that is conventionally used for this kind of energy storage device.

FIG. 5 is a perspective view of the spacer 40. FIG. 5 shows the spacer 40 expected to be arranged at the second sealing plate 10C side. As shown in FIG. 5, the spacer 40 includes a first spacer 41, a second spacer 42, and a coupling part 43. The first spacer 41 is, for example, a portion arranged at the upper surface 12 (see FIG. 3) side of the case 10. As shown in FIG. 5, the first spacer 41 includes a first opposed part 411 and a first wall part 412. The first opposed part 411 is, for example, a portion being opposed to the electrode assembly 30 (for example, the first end surface 30A of the electrode assembly 30). The first opposed part 411 herein is formed in an approximately rectangular flat plate shape. In the embodiment shown by FIG. 5, the first opposed part 411 includes a penetration hole 41h that is for making the electrolytic solution easily flow into the electrode assembly 30. The first wall part 412 is, for example, a portion that is configured to support the first opposed part 411 with respect to the second sealing plate 10C. The first wall part 412 herein is configured to extend from a peripheral edge of the first opposed part 411 toward the second sealing plate 10C. In this embodiment, a tip end of the first wall part 412 is configured to come into contact with the second sealing plate 10C.

The second spacer 42 is, for example, a portion arranged at the bottom surface 11 (see FIG. 3) side of the case 10. As shown in FIG. 5, the second spacer 42 includes a second opposed part 421 and a second wall part 422. The second opposed part 421 is, for example, a portion that is configured to be opposed to the electrode assembly 30 (for example, the first end surface 30A of the electrode assembly 30). The second opposed part 421 herein is formed in an approximately rectangular flat plate shape. In the embodiment shown by FIG. 5, the second opposed part 421 includes a penetration hole 42h that is for making the electrolytic solution easily flow into the electrode assembly 30. The second wall part 422 is, for example, a portion that is configured to support the second opposed part 421 with respect to the second sealing plate 10C. The second wall part 422 herein is configured to extend from a peripheral edge of the second opposed part 421 toward the second sealing plate 10C. In this embodiment, a tip end of the second wall part 422 is configured to come into contact with the second sealing plate 10C.

The coupling part 43 is, for example, a portion that is configured to couple the first spacer 41 and the second spacer 42. The coupling part 43 is, for example, formed in a plate shape. As shown in FIG. 5, the coupling part 43 is configured to couple the first spacer 41 and the second spacer 42 at one of first side surfaces 13 side (in FIG. 5, a side of the first side surface 13 positioned at the Y2 side (see FIG. 1 and FIG. 3, too)) of the case 10. In this embodiment, the coupling part 43 is configured to couple the first wall part 412 and the second wall part 422 at one of first side surfaces 13 side (in FIG. 5, the side of the first side surface 13 positioned at the Y2 side (see FIG. 1 and FIG. 3, too)) of the case 10. The coupling part 43 is not provided at the other one of first side surfaces 13 side (in FIG. 5, a side of the first side surface 13 positioned at the Y1 side (see FIG. 1 and FIG. 3, too)). Incidentally, in another embodiment, the coupling part 43 might be not provided. In that situation, the first spacer 41 and the second spacer 42 are not integrated.

At said the other one of first side surfaces 13 side of the case 10, the first spacer 41 and the second spacer 42 are not coupled. In this embodiment, regarding the spacer 40, a concave part 40r is provided that is dented from said the other one of first side surfaces 13 side of the case 10 toward said one of first side surfaces 13 side. On the concave part 40r, herein, a negative electrode tab 35 (the negative electrode tab group) is arranged.

Incidentally, in a situation where the spacer 40 is arranged at the first sealing plate 10B side, the first wall part 412 and the second wall part 422 are configured to extend toward the first sealing plate 10B. At the concave part 40r, the positive electrode tab 33 (the positive electrode tab group) is arranged.

Anyway, as described above, regarding the electrode assembly 30, the separator 36 configures the outer surface. Regarding this, the present inventor has paid attention to a matter that, for example, when the separator 36 configuring the outer surface of the electrode assembly 30 is peeled, the electrode arranged at the outermost side of the electrode assembly 30 or a material derived from said electrode comes into contact with another material, another member, or the like, of the energy storage device 1, so as to increase a risk of causing an inside short circuit. Thus, the present inventor has thought to suppress the inside short circuit from being caused on the energy storage device 1 and has examined about a configuration that can suppress the separator 36 configuring the outer surface of the electrode assembly 30 from being peeled.

FIG. 6 is a VI-VI cross section view of FIG. 3. FIG. 6 schematically shows cross section structures of the electrode assembly 30 and the spacer 40 of FIG. 3. In FIG. 6, illustrations of the case 10 and the resin film 50 are omitted. As shown in FIG. 6, the separator 36 configuring the outer surface of the electrode assembly 30 covers a part of the spacer 40. Here, a state in which the separator 36 configuring the outer surface of the electrode assembly 30 covers a part of the spacer 40 means a state in which the separator 36 configuring the outer surface (the outermost periphery) is arranged on a part of the surface of the spacer 40 in the thickness direction of the electrode assembly 30, as shown in FIG. 6. The thickness of the electrode assembly 30 herein represents the shortest distance between one of the second end surfaces 30B of the electrode assembly 30 and the other one of the second end surfaces 30B (see FIG. 4). The thickness direction of the electrode assembly 30 means a direction coming vertically from one of the second end surfaces 30B to the other one of the second end surfaces 30B, and is the second direction Y in each drawing.

In this embodiment, the separator 36 configuring the outer surface of the electrode assembly 30 is joined to the spacer 40. A state in which the separator 36 configuring the outer surface of the electrode assembly 30 is joined to the spacer 40 herein means a state in which the separator 36 configuring the outer surface of the electrode assembly 30 and the spacer 40 are integrated. As a means for joining the separator 36 and the spacer 40, for example, it is possible to use welding, such as heat welding and ultrasonic welding; adhering with an adhesion agent; crimping; joining with a jig, such as screw and snap, or mechanical joining, such as joining 2 members to each other by rough surface processing; or the like. Among them, the welding can be used preferably.

In the embodiment shown by FIG. 6, regarding the separator 36, the first portion 361 configuring the outer surface of the electrode assembly 30 and the second portion 362 arranged at an inner side of the electrode assembly 30 more than the first portion 361 are joined to each other so as to be a bag part 36A formed in a bag shape. In this embodiment, the second portion 362 is a portion configured to cover the negative electrode 34 arranged at the outermost side, regarding the electrode assembly 30. It is good that the means for joining the first portion 361 and the second portion 362 is, for example, welding, such as ultrasonic welding and heat welding. Regarding the bag part 36A, between the first portion 361 and the second portion 362, the negative electrode 34 arranged at the outermost side is accommodated.

In this embodiment, the bag part 36A covers a part of the spacer 40. Here, the bag part 36A is arranged on a part of the surface of the spacer 40. As shown in FIG. 6, the bag part 36A is joined to the spacer 40 (a joint part 36W). Here, of the separator 36 positioned at the first end surface 30A of the electrode assembly 30, a portion from which a portion joined to the spacer 40 is excluded is interfered with the spacer 40 so as to be bent. The above described portion joined to the spacer 40 herein is a portion contained in the joint part 36W of the separator 36, and, for example, is the first portion 361 and the second portion 362 which are contained in the bag part 36A.

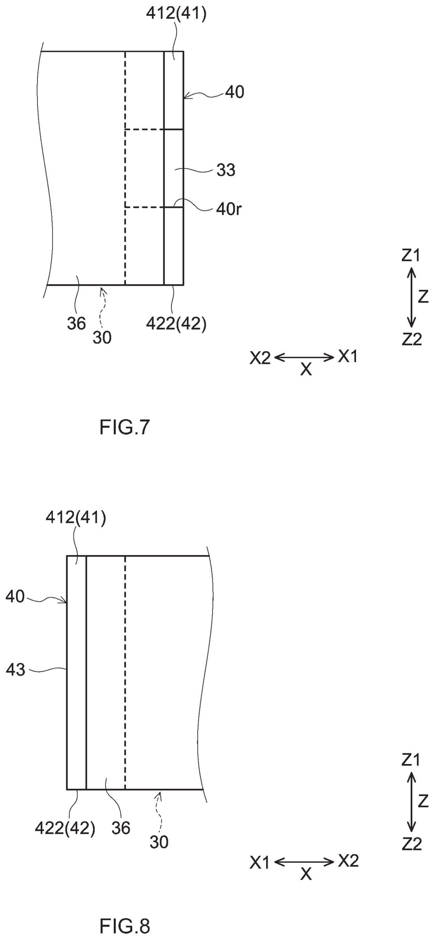

FIG. 7 and FIG. 8 are plane views of the electrode assembly 30, the separator 36, and the spacer 40. FIG. 7 schematically shows a planar positional relationship of the electrode assembly 30, the separator 36, and the spacer 40, which is viewed from a concave part 40r side (the Y1 side in the drawing) of the spacer 40. FIG. 7 shows a state in which the positive electrode tab 33 is arranged on the concave part 40r. FIG. 8 schematically shows a planar positional relationship of the electrode assembly 30, the separator 36, and the spacer 40, which is viewed from an opposite side (the Y2 side in the drawing) of the concave part 40r of the spacer 40.

In this embodiment, the separator 36 configuring the outer surface of the electrode assembly 30 is configured to cover a part of the first spacer 41 and a part of the second spacer 42. In the embodiments shown by FIG. 7 and FIG. 8, the separator 36 configuring the outer surface of the electrode assembly 30 is configured to cover a part of the first wall part 412, a part of the second wall part 422, and a part of the coupling part 43.

A size of a joint area of the separator 36 on the spacer 40 can be suitably set without particularly restriction, insofar as an effect of the herein disclosed technique is obtained. Based on a perspective of suppressing the separator 36 configuring the outer surface of the electrode assembly 30 from being peeled, when an area size of a portion of the spacer 40 covered by the separator 36 (here, a portion of the spacer 40 coming into contact with the separator 36) is treated as 100%, the area size of the joint area is, for example, equal to or more than 30%, preferably equal to or more than 50%, further preferably equal to or more than 70%, or furthermore preferably equal to or more than 90%, and it is better if it is closer to 100%.

Although not particularly restricting, from a perspective of implementing the effect of the herein disclosed technique, when a length of the spacer 40 in a direction from the bottom surface 11 of the case 10 toward the upper surface 12 is treated as 100%, it is preferable that the separator 36 and the spacer 40 are joined at a portion, for example, being equal to or more than 10%, preferably equal to or more than 20%, further preferably equal to or more than 30% (it is better if it is closer to 100%) from the bottom surface 11 side and the upper surface 12 side.

The resin film 50 is, for example, a member that is configured to establish an insulation between the case 10 and the electrode assembly 30. As shown in FIG. 3, the resin film 50 is arranged to surround an outer periphery of the electrode assembly 30. In this embodiment, the resin film 50 is formed in a cylindrical shape, and is configured to accommodate the electrode assembly 30 at the inside. From a perspective of further enhancing the insulating property for the case 10 and the electrode assembly 30, it is preferable that the resin film 50 is configured to accommodate a part of the spacer 40 at the inside. As a resin material configuring the resin film 50, for example, it is good to use a resin material configuring the resin film contained in this kind of energy storage device. As the resin material described above, for example, it is good to use a polyamide resin, a polyolefin resin (polyethylene, polypropylene, or the like), or the like.

As described above, the energy storage device 1 includes the electrode assembly 30 including the positive electrode 32, the negative electrode 34, and the separator 36, includes the case 10 configured to accommodate the electrode assembly 30, and includes the spacer 40 arranged between the case 10 and the electrode assembly 30. The separator 36 configures the outer surface of the electrode assembly 30. The separator 36 configuring the outer surface of the electrode assembly 30 is configured to cover a part of the spacer 40 and to be joined to the spacer 40.

The energy storage device 1 includes the spacer 40 that is arranged between the case 10 and the electrode assembly 30. By this, it is possible to suppress the electrode assembly 30 from moving in the case 10. In the energy storage device 1, the separator 36 configuring the outer surface of the electrode assembly 30 is configured to cover the part of the spacer 40 and further to be joined to the spacer 40. By this, it is possible to suppress the separator 36 configuring the outer surface of the electrode assembly 30 from being peeled. Thus, for example, it is possible to suppress the electrode from being exposed to an outside of the electrode assembly 30. By this, for example, it is possible to suppress a matter that a part of the active material layer slips down from the electrode. Further, for example, it is possible to suppress a matter that a foreign substance enters to an inside of the electrode assembly 30 and a matter that, when the foreign substance is caused at the inside of the electrode assembly 30 (for example, when a part of the active material layer slips down in the electrode assembly 30), the foreign substance moves to the outside of the electrode assembly 30. By this, it is possible to suppress the inside short circuit from being caused in the energy storage device 1.

The case 10 might contain the case body 10A that has the opening 15 and might contain the sealing plate (here, the first sealing plate 10B and the second sealing plate 10C) that is configured to seal the opening 15. The spacer 40 might be arranged between the sealing plate (here, the first sealing plate 10B and the second sealing plate 10C) and the electrode assembly 30. By this, it is possible to reduce a risk of causing the short circuit of the sealing plate and the electrode assembly 30. At the manufacturing process of the energy storage device 1, for example, the risk of causing the foreign substance can be increased when the sealing plate is attached to the opening 15. Thus, in the configuration described above, it is possible to further preferably implement the effect of the herein disclosed technique.

At the joint part 36W of the separator 36 and the spacer 40, the separator 36 and the spacer 40 might be welded. In other words, the separator 36 and the spacer 40 might be joined by welding. By this, for example, it is possible to enhance the joint strength between them. Therefore, the effect of the herein disclosed technique can be implemented further preferably.

The electrode assembly 30 might include a tab (here, the positive electrode tab 33 or the negative electrode tab 35) on the first end surface 30A, while the tab is electrically connected to the positive electrode 32 or the negative electrode 34. Between the case 10 and the first end surface 30A, the spacer 40 might be arranged. The first end surface 30A of the electrode assembly 30 is not covered by the separator 36, because of the tab being provided. In other words, the first end surface 30A is an open surface with respect to the case 10. Therefore, by arranging the spacer 40 between the case 10 and the first end surface 30A, the effect of the herein disclosed technique can be implemented further preferably.

Of the separator 36, the first portion 361 configuring the outer surface of the electrode assembly 30 and the second portion 362 arranged at the inner side of the electrode assembly 30 more than the first portion 361 might be joined to each other to be formed in a bag shape. Between the first portion 361 and the second portion 362, at least any one of the positive electrode 32 and the negative electrode 34 might be accommodated. In the electrode assembly 30, when a peeling is caused on the first portion 361, the electrode positioned at the outer side of the electrode assembly 30 tends to be more susceptible to the effect of the peeling of the first portion 361. Therefore, by making the first portion 361 and the second portion 362 be formed in the bag shape and accommodating the electrode in that, it is possible to further suitably suppress the foreign substance from moving to the inside of the electrode assembly 30 from the outside of the electrode assembly 30 and further suitably suppress the foreign substance from moving to the outside of the electrode assembly 30 from the inside of the electrode assembly 30.

As for the electrode assembly 30, the energy storage device 1 might include a flat-shaped electrode assembly having the zigzag-shaped structure, in which the long separator 36 formed in the strip-like shape is folded alternately at each predetermined interval to be formed in a flat shape and then the positive electrodes 32 and the negative electrodes 34 are alternately interposed by the zigzag-shaped separator 36. When the electrode assembly 30 is the electrode assembly having the zigzag-shaped structure, the electrode assembly 30 includes the open surface with respect to the case 10. Thus, by making the energy storage device 1 include the electrode assembly having the zigzag-shaped structure as the electrode assembly 30, the effect of the herein disclosed technique can be implemented further preferably.

The separator 36 might be wound more than once on the electrode arranged at the outermost side in the electrode assembly 30. By this, it is possible to further suitably suppress the electrode arranged at the outermost side of the electrode assembly 30 from being exposed.

The case 10 might include the bottom surface 11, the upper surface 12, the pair of opposed first side surfaces 13 whose area sizes are relatively larger, and the pair of opposed second side surfaces 14 whose area sizes are relatively smaller. The spacer 40 might be arranged between the electrode assembly 30 and the second side surface 14. At the bottom surface 11 side and the upper surface 12 side, the separator 36 and the spacer 40 might be joined. By arranging the spacer 40 between the electrode assembly 30 and the second side surface 14 whose area size is relatively smaller, it is possible, for example, to further increase a capacity inside the case 10 into which the electrode assembly 30 can be accommodated. Thus, it is possible to make the electrode assembly 30 be larger. By joining the separator 36 and the spacer 40 at the bottom surface 11 side and the upper surface 12 side, it is possible especially at the bottom surface 11 side and the upper surface 12 side to further suitably suppress the movement of the foreign substance from the outside of the electrode assembly 30 to the inside of the electrode assembly 30 and the movement of the foreign substance from the inside of the electrode assembly 30 to the outside of the electrode assembly 30.

When a length of the spacer 40 in the direction from the bottom surface 11 toward the upper surface 12 is treated as 100%, the separator 36 and the spacer 40 might be respectively joined at portions being at least 10% from the bottom surface 11 side and the upper surface 12 side. By this, it is possible to further suitably keep the joint state of the separator 36 and the spacer 40. Therefore, the effect of the herein disclosed technique can be further preferably implemented.

The energy storage device 1 can be used for various purposes, but among them, it is preferably used as a power source for a motor (a driving power supply) mounted on a vehicle, such as passenger car and truck. Although the type of the vehicle is not particularly restricted, it is possible as a suitable example to be a plug-in hybrid electric vehicle (PHEV), a hybrid electric vehicle (HEV), a battery electric vehicle (BEV), or the like.

Above, although the embodiments of the herein disclosed technique have been explained, the embodiments are merely illustrative, and are not construed as limiting the scope of the appended claims. The technique recited in claims contains matters, for example, in which below described specific examples are variously deformed or changed.

For example, in the embodiment described above, the energy storage device 1 includes the electrode assembly 30 that has the zigzag-shaped structure. However, the herein disclosed technique is not restricted by this. The energy storage device 1 might include a wound electrode assembly formed in a flat shape, as the electrode assembly. The wound electrode assembly is, for example, an electrode assembly in which the long positive electrode formed in the strip-like shape and the long negative electrode formed in the strip-like shape are laminated via the long separator formed in the strip-like shape and then wound therein along the longitudinal direction. The wound electrode assembly includes the open surface with respect to the case 10. Thus, by making the energy storage device 1 include the wound electrode assembly, the effect of the herein disclosed technique can be implemented further preferably. It is good that a winding axis of the wound electrode assembly herein is in parallel to the bottom wall 11. It is good that the open surface of the wound electrode assembly herein is opposed to the second side surface 14. It is preferable that the spacer 40 is arranged between the open surface of the wound electrode assembly and the second side surface 14.

Alternatively, the electrode assembly 30 might be a laminate electrode assembly in which the positive electrode formed in the rectangular sheet and the negative electrode formed in the rectangular sheet are laminated via the separator formed in the rectangular sheet. In that situation, from a perspective of further suitably implementing the effect of the herein disclosed technique, it is preferable that, among the separators contained in the laminate electrode assembly, the separator configuring the outer surface of the laminate electrode assembly and the separator superimposed on the electrode arranged at the outermost side in the laminate body are larger separators than the other separators in which these separators are excluded.

The herein disclosed technique could contain techniques recited in below-described Items.

### Item 1:

An energy storage device, comprising:
an electrode assembly that comprises a positive electrode, a negative electrode, and a separator disposed between the positive electrode and the negative electrode;
a case that is configured to accommodate the electrode assembly; and
a spacer that is arranged between the case and the electrode assembly,
wherein
the separator configures an outer surface of the electrode assembly, and
the separator configuring the outer surface of the electrode assembly is configured to cover a part of the spacer and is joined to the spacer.

### Item 2:

The energy storage device recited in Item 1, wherein
the case comprises a case body having an opening and comprises a sealing plate configured to seal the opening, and
the spacer is arranged between the sealing plate and the electrode assembly.

### Item 3:

The energy storage device recited in Item 1 or 2, wherein
the separator and the spacer are welded at a joint part of the separator and the spacer.

### Item 4:

The energy storage device recited in any one of Items 1 to 3, wherein
the electrode assembly comprises a tab that is arranged on a first end surface and that is electrically connected to the positive electrode or the negative electrode, and
the spacer is arranged between the case and the first end surface.

### Item 5:

The energy storage device recited in any one of Items 1 to 4, wherein
a first portion configuring the outer surface of the electrode assembly and a second portion being arranged at an inner side of the electrode assembly more than the first portion, of the separator, are joined to each other so as to be formed in a bag shape, and at least any one of the positive electrode and the negative electrode is accommodated between the first portion and the second portion.

### Item 6:

The energy storage device recited in any one of Items 1 to 5, wherein
the electrode assembly is in a flat shape, and comprises a zigzag-shaped structure in which the separator formed in a long strip-like shape is folded alternately at each predetermined interval so as to be formed in a zigzag shape and in which the positive electrodes and the negative electrodes are alternately interposed by the separator formed in the zigzag shape.

### Item 7:

The energy storage device recited in any one of Items 1 to 6, wherein
the electrode assembly is a wound electrode assembly which is formed in a flat shape and in which the positive electrode formed in a long strip-like shape and the negative electrode formed in a long strip-like shape are laminated via the separator formed in a long strip-like shape so as to be wound therein along a longitudinal direction.

### Item 8:

The energy storage device recited in any one of Items 1 to 7, wherein
the separator is wound more than once on an electrode arranged at an outermost side in the electrode assembly.

### Item 9:

The energy storage device recited in any one of Items 1 to 8, wherein
the case comprises a bottom surface, an upper surface, a pair of first side surfaces which are opposed to each other and whose area sizes are relatively larger, and a pair of second side surfaces which are opposed to each other and whose area sizes are relatively smaller,
the spacer is arranged between the electrode assembly and the second side surface, and
at the bottom surface side and the upper surface side, the separator and the spacer are joined.

### Item 10:

The energy storage device recited in Item 9, wherein
when a length of the spacer in a direction from the bottom surface toward the upper surface is treated as 100%, the separator and the spacer are joined respectively on portions being at least 10% from the bottom surface side and the upper surface side.

## Claims

1. An energy storage device (1), comprising:
an electrode assembly (30) that comprises a positive electrode (32), a negative electrode (34), and a separator (36) disposed between the positive electrode (32) and the negative electrode (34);
a case (10) that is configured to accommodate the electrode assembly (30); and
a spacer (40) that is arranged between the case (10) and the electrode assembly (30), wherein
the separator (36) configures an outer surface of the electrode assembly (30), and
the separator (36) configuring the outer surface of the electrode assembly (30) is configured to cover a part of the spacer (40) and is joined to the spacer (40).

2. The energy storage device (1) according to claim 1, wherein
the case (10) comprises a case body (10A) having an opening (15) and comprises a sealing plate (10B, 10C) configured to seal the opening (15), and
the spacer (40) is arranged between the sealing plate (10B, 10C) and the electrode assembly (30).

3. The energy storage device (1) according to claim 1 or 2, wherein
the separator (36) and the spacer (40) are welded at a joint part (36W) of the separator (36) and the spacer (40).

4. The energy storage device (1) according to any one of claims 1 to 3, wherein
the electrode assembly (30) comprises a tab (33, 35) that is arranged on a first end surface (30A) and that is electrically connected to the positive electrode (32) or the negative electrode (34), and
the spacer (40) is arranged between the case (10) and the first end surface (30A).

5. The energy storage device (1) according to any one of claims 1 to 4, wherein
a first portion (361) configuring the outer surface of the electrode assembly (30) and a second portion (362) being arranged at an inner side of the electrode assembly (30) more than the first portion (361), of the separator (36), are joined to each other so as to be formed in a bag shape, and at least any one of the positive electrode (32) and the negative electrode (34) is accommodated between the first portion (361) and the second portion (362).

6. The energy storage device (1) according to any one of claims 1 to 5, wherein
the electrode assembly (30) is in a flat shape, and comprises a zigzag-shaped structure in which the separator (36) formed in a long strip-like shape is folded alternately at each predetermined interval so as to be formed in a zigzag shape and in which the positive electrodes (32) and the negative electrodes (34) are alternately interposed by the separator (36) formed in the zigzag shape.

7. The energy storage device (1) according to any one of claims 1 to 6, wherein
the electrode assembly (30) is a wound electrode assembly which is formed in a flat shape and in which the positive electrode (32) formed in a long strip-like shape and the negative electrode (34) formed in a long strip-like shape are laminated via the separator (36) formed in a long strip-like shape so as to be wound therein along a longitudinal direction.

8. The energy storage device (1) according to any one of claims 1 to 7, wherein
the separator (36) is wound more than once on an electrode arranged at an outermost side in the electrode assembly (30).

9. The energy storage device (1) according to any one of claims 1 to 8, wherein
the case (10) comprises a bottom surface (11), an upper surface (12), a pair of first side surfaces (13) which are opposed to each other and whose area sizes are relatively larger, and a pair of second side surfaces (14) which are opposed to each other and whose area sizes are relatively smaller,
the spacer (36) is arranged between the electrode assembly (30) and the second side surface (14), and
at the bottom surface (11) side and the upper surface (12) side, the separator (36) and the spacer (40) are joined.

10. The energy storage device (1) according to claim 9, wherein
when a length of the spacer (40) in a direction from the bottom surface (11) toward the upper surface (12) is treated as 100%, the separator (36) and the spacer (40) are joined respectively on portions being at least 10% from the bottom surface (11) side and the upper surface (12) side.
